# EUROPÄISCHE PATENTSCHRIFT

(11) **EP 0 863 168 B1**
(45) Veröffentlichungstag und Bekanntmachung des Hinweises auf die Patenterteilung: **02.01.2003**
(21) Anmeldenummer: 98102963.0
(22) Anmeldetag: 20.02.1998
(51) Int. Cl.: C08F 265/06, C09J 151/00

(54) **Verfahren zur Herstellung von wässrigen Dispersionen als Grundierung für Heisssiegelkleber**
Process for the preparation of aqueous dispersions as primer for melt adhesives
Procédé de préparation de dispersions aqueuses servant de primaire pour des adhésifs thermofusibles

(30) Priorität: 06.02.1998 DE 19804613; 03.03.1997 DE 19708412
(43) Veröffentlichungstag der Anmeldung: 09.09.1998
(73) Patentinhaber: Röhm GmbH & Co. KG, 64293 Darmstadt (DE)
(72) Erfinder: Scheuermann, Hubert, Dr., 45772 Marl (DE); Tessmer, Dieter, 64297 Darmstadt (DE); Fölsch, Karl, Josef, Dr., 55128 Mainz (DE); Elser, Wilhelm, 88499 Riedlingen (DE); Wicke, Michael, 64342 Seeheim-Jugenheim (DE)

(56) Entgegenhaltungen:
- US-A- 4 948 822
- US-A- 5 120 889

## Beschreibung

Die Erfindung betrifft eine wässrige Dispersion auf Poly(meth)acrylatbasis, hergestellt in einem mehrstufigen Emulsionspolymerisationsverfahren und ihre Verwendung als heißsiegelfähige Grundierung für Bindemittelzusammensetzungen

### Stand der Technik

In der Vergangenheit wurden der Verpackungsindustrie Heißsiegelmassen zur Verfügung gestellt, welche die technischen Anforderungen im großen und ganzen recht gut erfüllen, allerdings auf Basis von organischen Lösungsmitteln. So beschreibt z. B. das EP 129 178 ein heißsiegelfähiges Beschichtungsmittel bestehend aus einer filmbildenden Dispersion mindestens zweier verschiedener Polymertypen mit unterschiedlichen Hafteigenschaften in einem organischen Lösungsmittelsystem, wobei die Dispersion außer den beiden Polymertypen ein aus Komponenten,die beiden Polymertypen entsprechen, aufgebautes Polymerisat enthält. Breite Anwendung fanden in der Vergangenheit auch Polymerisate des Vinylidenchlorids als Heißsiegelkleber.

Aus der Sicht der Praxis besonders wichtig sind Beschichtungsmittel für die Versiegelung von Metalluntergründen. Insbesondere das Versiegeln von Aluminium gegen Kunststoffe wie Polystyrol, Polypropylen und Polyvinylchlorid aber auch gegen Glas ist von erheblicher wirtschaftlicher Bedeutung. (Vgl. Ullmanns Encyclopädie der techn. Chemie, 6. Aufl. Bd. 16, S. 101 - 103, Verlag Chemie 1985 ff).

DE 42 19 651 (BASF AG) beschreibt eine wäßrige Dispersion, enthaltend ein Copolymerisat A, in dessen Gegenwart Copolymerisat B polymerisiert wird. Copolymerisat A wird in Substanz hergestellt und stellt kein Kem-Schale-Produkt dar. Die Produkte werden bei Siegelung von Karton gegen PVC verwendet.

JP 08 231729 A (Derwent Nr. 96-461419/46) Die Produkte bestehen aus Kem-Schale-Polymerisaten, die nach der Emulsionspolymerisation sprühgetrocknet werden. Die Schale enthält größere Mengen an carboxylgruppenhaltigen Monomeren, die die Redispergierbarkeit der Produkte in Wasser verbessert.

### Aufgabe und Lösung

Dank eines gesteigerten Umweltbewußtseins läßt sich bei der Verwendung von Beschichtungsmitteln eine steigende Tendenz registrieren, weg von lösungsmittelhaltigen Formulierungen und hin zu wässrigen Dispersionen, die bei der Applikation keine organischen Verbindungen in die Umgebung abgeben. Besonders ausgeprägt ist auch die Abkehr von chlorhaltigen Produkten und - in vielleicht geringerem Maße - von Aromaten.

Die Technik hat diesen Forderungen zum Teil Rechnung getragen: So können z. B. die als Heißsiegelkleber verwendeten Polymerisate des Vinylidenchlorids nach DE-A 29 06 118 in Form einer wässrigen Dispersion aufgebracht werden. Um die Haftung auf nicht grundierten Kunststoff- und Metallfolien zu verbessern, können sie mit besonderen Verankerungsmitteln versetzt werden. Dazu eignen sich wasserlösliche Polymerisate von funktionell substituierten Acryl- und/oder Methacrylamiden oder deren Copolymerisate mit Acryl- und/oder Methacrylamid, die in der wässrigen Phase der Dispersion gelöst vorliegen.

In der praktischen Anwendung sind zwei Verfahren für die Beschichtung von Aluminiumfolien verbreitet:

Für aggressivere Füllmaterialien wird zunächst eine ca. 2 µm dicke Grundierung auf der Aluminiumfolie aufgetragen, bestehend aus einem vinylchloridhaltigen Lösungspolymerisat und darauf wird eine 4 - 8 µm dicke Deckschicht aus einem Methacrylatharz appliziert.

Für weniger aggressive Füllmaterialien wird mit einem Einschichtsystem aus einer Mischung der oben genannten Polymerisate eine heißsiegelfähige Schicht von ca. 5 - 10 µm erzeugt.

Nicht gelöst wurde dadurch allerdings die Aufgabe, chlorfreie Heißsiegelkleber in Form wässriger Dispersionen mit ausreichender Haftfestigkeit zur Verfügung zu stellen. Gemäß den DE-A 2 727 914 (USA 4,291,090) und DE-A 2 855 147 können Heißsiegelkleber auf Polyacrylat-basis in Form wässriger Dispersionen aufgebracht werden. Sie sind z. Teil nicht allein aus Estern der Acryl- und/oder Methacrylsäure aufgebaut, sondern können ein oder mehrere Comonomere enthalten, die beispielsweise zur Einstellung der gewünschten Schmelztemperatur oder der Härte oder der Haftungseigenschaften dienen. Als Comonomere werden unter vielen anderen auch Acryl- und Methacrylamid und Aminoalkylester der Acryl- und/oder Methacrylsäure erwähnt, ohne daß ihnen ein bestimmter Einfluß auf die Polymerisateigenschaften zugeschrieben würde.

Aus der DE-A 3 930 743 (Canadische Patentanmeldung 2,025,368.1) ist eine wässrige Polyacrylat-Dispersion als Heißsiegelkleber auf Basis eines zu wenigstens 70 Gew.-% aus niederen Alkylmethacrylaten aufgebauten Polyacrylats mit einem Gehalt von polymerisiertem (Meth)acrylamid oder Aminoalkyl(meth)acrylat bekannt. Weitere Druckschriften beziehen sich auf wässrige Dispersionen von Copolymerisaten von Olefinen und/oder Vinylacetat unter Einbeziehung von chlorhaltigen Monomeren in einem einstufigem Verfahren. Die dabei erzielten Haftfestigkeiten der Aluminiumverbunde sind verbesserungsbedürftig.

Soweit wässrige Polymerdispersionen mit Kem-Schale-Aufbau der Polymerpartikel beschrieben wurden, enthalten sie chlorhaltige Monomere oder sie eignen sich nicht für den Verbund Aluminium/Kunststoff.

Die EP-A 574 803 beschreibt wässrige Dispersionen mit 5 - 80 Gew.-% eines Copolymers (A) mit einer Glastemperatur von 50 - 150 °C und 95 - 20 Gew.-% eines Copolymers (B) mit einer Glastemperatur von -50 bis 50 °C, wobei die Temperaturdifferenz 20 °C sein soll. Eine besondere Eignung der in dieser Druckschrift vorgeschlagenen Produkte für Aluminium-Kunststoffverbunde ist nicht zu erkennen.

Im geschilderten Stand der Technik wird gleichfalls kein Zweischichtverfahren beschrieben.

Ein zweischichtiger Auftrag wird in der JP-A 54 161 684 (Chem. Abstr. 92 : 199427 x) vorgeschlagen. Dabei wird eine Aluminiumfolie zunächst mit der wässrigen Dispersion eines Monomeren und anschließend mit einem Gemisch aus Ethylen-Vinylacetat-Copolymer, Colophonium und Wachs bis zu einer Dicke von 20 µm beschichtet.

Im Hinblick auf die bestehende Aufgabe, Zurverfügungstellung wässriger chlorfreier Polymerdispersionen als Heißsiegelkleber war ein weiterer Aspekt nicht zu vernachlässigen, nämlich sich in apparativer Hinsicht an die Verfahren des Standes der Technik anschließen zu können. Dieser Aspekt kommt beispielsweise bei der in großem Umfang durchgeführten Beschichtung von Aluminiumfolie besonderer Bedeutung zu. Es kommt z. B. darauf an, daß das Polymer als dünner Film mittels gängiger Auftragsverfahren (vgl. Polymer Handbuch 2. Aufl., Hanser Verlag) auf Aluminiumfolie aufgebracht werden kann und bei den üblicherweise auftretenden Temperaturen nicht klebrig wird.

Beim Heißsiegeln mit dem entsprechenden Substrat sollte jedoch innerhalb kurzer Zeit und bei nicht zu hohen Temperaturen - als Richtwert seien z. B. 180 - 220 °C genannt - eine ausreichende Haftfestigkeit für den Verbund der beiden Materialien (z. B. Aluminium/Polystyrol) entstehen.

Da diese Verpackungsmethode auch bei Lebensmitteln verbreitet eingesetzt wird, sollten die Monomerbasis und die Hilfsstoffe auch so gewählt werden können, daß sie die lebensmittelrechtlichen Richtlinien (BGA 14 - Richtlinie, entsprechend FDA-Richtlinie) erfüllen.

Die Lehre der DE-A 3 930 743 stellt eine wässrige Dispersion zur Verfügung, die auf einer mit Vinylchlorid-Copolymerisat grundierter Aluminiumfolie ausreichende Haftung aufweist. Die Bemühungen, ausgehend von derartigen Dispersionen durch Einbau geeigneter haftungsvermittelnder Monomerer auch auf nicht grundiertem Aluminium eine direkthaftende Variante zu entwickeln, führten nicht unmittelbar zum Ziel, so daß sich als Lösung eher der Ersatz der chlorhaltigen Grundierung anbot. Allerdings erwiesen sich in dieser Richtung angestellte Versuche mit Polymeren mit einfachem Partikelaufbau nicht als sehr befriedigend.

Es wurde nun gefunden, daß überraschenderweise nach dem erfindungsgemäßen Emulsionspolymerisationsverfahren hergestellten Polymeren mit zweistufigem oder mehrstufigem Partikelaufbau die Anforderungen der Technik erfüllen.

Die Erfindung betrifft somit wässrige, durch Emulsionspolymerisation hergestellte Poly(meth)acrylatdispersionen PD mit mindestens zweistufigem Partikelaufbau als Heißsiegelkleber, wobei das partikelförmige Poly(meth)acrylat P aufgebaut ist aus
(A) 50 bis 90, vorzugsweise 60 bis 80 Gew.-% Methacrylsäureethylester, sowie
(B) 5 bis 30, vorzugsweise 10 bis 20 Gew.-% eines weichmachenden Acrylsäurealkylesters mit einer Glastemperatur im Bereich T_{g} ca. - 50 bis -20°C der Formel I 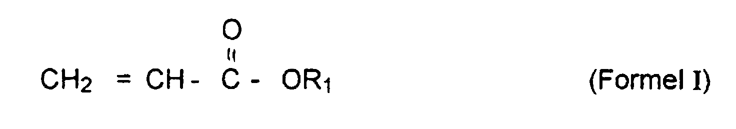 worin
   - R₁:: für einen Alkyl-, Aryl- oder Alkarylrest mit 2 - 10 Kohlenstoffatomen, wobei der Alkylrest auch verzweigt oder zyklisch sein kann, insbesondere für n-Butyl, isoButyl, Propyl, Ethylhexyl steht, sowie
(C) 2 bis 10, vorzugsweise 3 bis 10 Gew.-% eines funktionalisierten Monomeren der Formel II 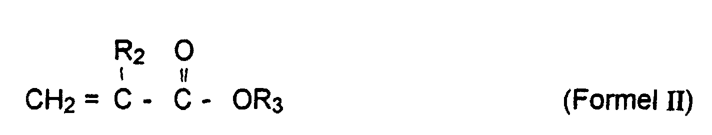 worin
   - R₂: für Wasserstoff oder Methyl und R₃ für einen Rest 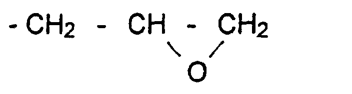 oder für einen mit mindestens einer Hydroxylgruppe substituierten Alkylrest mit 2 bis 6 Kohlenwasserstoffatomen steht, sowie
(D) 2 bis 10, vorzugsweise 3 bis 10 Gew.-% mindestens einer radikalisch polymerisierbaren Carbonsäure, vorzugsweise ausgewählt aus der Gruppe bestehend aus der Methacrylsäure und der Maleinsäure, Acrylsäure oder Itaconsäure oder einer Polycarbonsäure oder einer teilveresterten Polycarbonsäure, als Polycarbonsäure kann beispielsweise ROHAGIT SL 140 verwendet werden
   und
(E) 0 bis 40 Gew.% weitere, mit (A) bis (D) copolymerisierbaren Monomeren, vorzugsweise Styrol und andere Cycloalkyl(meth)-acrylate
mit der Maßgabe, daß in der ersten Polymerisationsstufe (Zulauf 1) Monomer der Gruppen (A) bis (C) und gegebenenfalls (E) und in der zweiten Polymerisationsstufe (Zulauf 2) Monomere der Gruppen (A), (B), (D) und gegebenenfalls (E) copolymerisiert werden. Zulauf 1 und 2 können je nach Monomeren als Zulauf oder als Batch ausgeführt werden.

Die Monomeren der Gruppen (A) bis (E) ergänzen sich zu 100 Gew.-%. Besonders bevorzugt ist als Monomer der Formel I n-Butylacrylat. Als Monomer der Formel II seien das Glycidyl(meth)acrylat, sowie das Hydroxyethyl(meth)acrylat hervorgehoben.

Als Monomere der Gruppe (E) seien das Styrol sowie seine mit C₁ - C₄-Alkylgruppen substituierten Derivate, sowie Cycloalkyl(meth)acrylate genannt. Daten zur Glastemperatur T_{g} finden sich z. B. in Kirk-Othmer, Encyclopedia of Chemical Technology, 3^{rd} Ed. Vol. 1, S. 387 - 389, J. Wiley 1978.

Die Mengenverhältnisse der Polymerisationsstufen können zwischen 30 zu 70 und 70 zu 30 Gewichtsteilen liegen. Als Anhalt für die Mengenbemessung der Polymerisationsstufen sei angemerkt, daß die beiden Stufen sich mengenmäßig um nicht mehr als der Faktor 2,5 unterscheiden sollen.

Als Richtwerte seien ferner genannt:
Ein Gehalt des Methacrylats an den in erster Stufe polymerisierten Monomeren von ca. 60 ± 20 Gew.-Teilen.
Ein Gehalt der Monomeren der Formel I an den in erster Stufe polymerisierten Monomeren von ca. 30 ± 10 Gew.-Teilen.

Ein Gehalt der Monomeren der Formel II an den in erster Stufe polymerisierten Monomeren von ca. 10 ± 5 Gew.-Teilen.
Der sich zu 100 ergänzende Restgehalt kann durch Monomere der Gruppe E erfolgen.

Desweiteren gilt:
Ein Gehalt des Methylmethacrylats bzw. des Monomeren der Gruppe (E) an den in zweiter Stufe polymerisierten Monomeren von ca. 20 ± 10 Gew.-Teilen.

Ein Gehalt der (Meth)acrylsaure an den in zweiter Stufe polymeriserten Monomeren von ca. 12 ± 8 Gew.-Teilen.

Die angegebenen Bereiche sind so zu verstehen, daß sich die Monomeren zu 100 Gew -Teilen, bezogen auf die Gesamt-Monomeren, einer jeden Stufe, ergänzen
Das Molekulargewicht der Poly(meth)acrylate in den Dispersionen PD liegt im allgemeinen im Bereich > 20000 g/mol. Der Polymerisatgehalt der Dispersionen liegt in der Regel im Breich 20 bis 65 Gew.-%, die Partikelgröße im Bereich 60 bis 250 nm, bevorzugt: 80 - 160 nm, besonders bevorzugt: 100 - 140 nm (Bestimmung mittels Photonenkorrelationsspektroskopie).

### Ausführung der Erfindung

Die erfindungsgemäß einzusetzenden Poly(meth)acrylatdispersion PD wird durch Emulsionspolymerisation in wässriger Phase in Gegenwart von an sich bekannten anionischen, kationischen oder nichtionischen Emulgatoren und mindestens eines radikalbildenden Initiators in zweistufiger Reaktion hergestellt. (Vgl. H. Rauch-Puntigam, Th. Völker, Acryl- und Methacrylver-bindungen, Springer-Verlag 1967, S. 217 - 230).

Besonders zu erwähnen ist, daß die vorteilhaften Eigenschaften, wie beispielsweise Abzugsfestigkeit, mit Hilfsstoffen, wie sie in den lebensmittelrechtlichen Bestimmungen (BGA 14. - Richtlinie und entsprechenden FDA-Richtlinien) genannt sind, erreicht werden können.

Die erste Stufe entspricht einem Zulaufverfahren, wobei man zu einer Vorlage aus entionisiertem Wasser und Emulgator in einem geeigneten mit Rührer und Heizung ausgestatteten Reaktionsgefäß, nach Erreichen einer bestimmten Temperatur den Initiator, insbesondere anorganische Peroxide wie Kalium- oder Ammoniumperoxodisulfat (KPS, APS), vorzugsweise in Wasser gelöst, zugibt. Der Gehalt an Initiator in der Vorlage liegt - als Anhalt - im Bereich 0,6 Gew.-%, bezogen auf die Monomeren des Zulaufs 1.

Als ionische Emulgatoren, die in Mengen von 0,01 bis 2 Gew.-% bezogen auf die gesamte Monomermenge eingesetzt werden, kommen insbesondere anionische Emulgatoren infrage (z. B. das Produkt AEROSOL OT75® der Cyanamid BV oder Dowfax 2A1 der Dow Europa SA). Dazu gibt man im Zulaufverfahren innerhalb eines gewissen Zeitraums - genannt seien ca. 2 Stunden - in erster Stufe das vorstehend charakterisierte Gemisch als Zulauf 1 zu. Zulauf 1 enthält beispielsweise 20 - 60 Gew.-% des gesamten Wassers zusammen mit den Monomeren der Gruppen (A) bis (C) und eventuell (E).

Zweckmäßig läßt man noch über einen gewissen Zeitraum, beispielsweise eine Stunde bei erhöhter Temperatur, z. B. bei 80°C nachrühren, läßt abkühlen, beispielsweise auf ca. 30°C und läßt dann die unter "Zulauf 2" genannten Monomeren über einen kürzeren Zeitraum, beispielsweise 30 Min. zutropfen und über einen längeren Zeitraum, beispielsweise 4 Stunden einquellen.
Anschließend heizt man die gebildete wässrige Monomer/Polymermischung etwas auf, beispielweise auf 40°C und setzt emeut Radikalstarter zu, zweckmäßigerweise einen Redoxinitiator, beispielsweise gebildet aus Peroxodisulfat, Dithionit und Eisen-II-sulfat in Wasser und startet wiederum die Polymerisation.

Nach Erreichen der Temperaturspitze wird die Temperatur zweckmäßig eingeregelt, beispielsweise auf 80°C und weiter über einen gewissen Zeitraum, beispielsweise 2 Stunden, zur Vervollständigung der Polymerisation nachgerührt.

Alternativ kann man auch die 2. Stufe als z. B. 2stündigen Zulauf einer Monomeremulsion durchführen.

Nach dem Abkühlen auf ca. 30 °C gibt man zweckmäßig ein geeignetes Konservierungsmittel, beispielsweise Acticid SPX® der Thor Chemie GmbH zu und versetzt mit etwas Ammoniak (25 %, in Wasser).

Auch die Zugabe von 0 - 5 % nichtionischer Emulgatoren z. B. ethoxylierte Alkohole oder Methacrylsäureester von Methoxy-polyethylenglycolen, wie beispielsweise Carbowax 550 oder Alkylphenole ist möglich, ebenso wie zusätzliche Mengen eines anionischen Emulgators.

In der Regel kann die Polymerdispersion PD unmittelbar als solche zur Beschichtung eingesetzt werden. In besonderen Fällen können begrenzte Mengen an Verdickungsmitteln oder an Filmbildungshilfsmitteln mitverwendet werden. Die Beschichtung kann durch Sprühen, Streichen, Gießen, Tauchen, Rakeln oder Walzen aufgebracht werden, im allgemeinen in solcher Dicke, daß beim Trocknen eine Schicht von 2 bis 10 µm ensteht.

In der Praxis wird die Trocknung zweckmäßig in einen Trockenofen oder in einem kontinuierlich durchlaufenden Trockentunnel, gegebenenfalls bei vermindertem Druck und bei Temperaturen zwischen 100 und 200 °C vorgenommen.

Die erforderliche Trockenzeit ist im allgemeinen umso kürzer je, höher die Trocknungstemperatur liegt und beträgt beispielsweise zwischen 5 sec und 5 min. Gegebenenfalls ist auch ein Mehrfachauftrag möglich. Vorzugsweise eigenen sich die Polymerdispersionen PD zum Auftrag auf nicht-poröse, geschlossene Substrat-Oberflächen wie die von Kunststoff-Folien oder insbesondere von Metallfolien, beispielsweise Aluminiumfolien oder Eisen.

Wie bereits vorstehend ausgeführt, gestatten die erfindungsgemäßen Poly(meth)acrylatdispersionen PD als Heißsiegelkleber unter anderem die Lösung einer als vordringlich erkannten Aufgabe, nämlich die erwünschte Haftung von Heißsiegelmassen auf Basis wässriger Acrylatdispersionen, beispielsweise des in DE-A 3 930 743 vorgeschlagenen Typs auf Untergründen, insbesondere auf Metallfolien, speziell auf Aluminiumfolien.

Die vorliegende Erfindung umfaßt daher heißsiegelfähig beschichtete Substrate auf Metall- oder Kunststoffbasis, wobei als Grundierschicht die erfindungsgemäße Poly(meth)acrylatdispersion PD aufgebracht und auf die getrocknete Grundierschicht eine weitere Schicht aus einer wässrigen Poly(meth)acrylatdispersion, bestehend zu wenigstens 70 Gew.-% aus wenigstens einem C₁ - C₄ Alkylesters der (Meth)acrylsäure und mit einem Gehalt an (Meth)acrylamid und/oder Aminoalkyl(meth)acrylat, aufgebracht und getrocknet wird. (Über die im folgenden beispielhaft belegten Anweisungen hinaus kann auf die Offenbarung der DE-A 3 930 743 zurückgegriffen werden.
Eine entsprechende Dispersion und ihre Anwendung wird nachfolgend (s. Beispiel II) beschrieben.

Zum Heißsiegeln muß in der Beschichtung die Glasübergangstemperatur des Poly(meth)acrylats überschritten werden. Die Temperatur der Siegelbacken muß um so höher über der erforderlichen Siegeltemperatur liegen, je kürzer die Kontaktzeit und um so schlechter die Wärmeleitung durch die Substratschicht ist. Dünne Metallfolien haben eine sehr gute Wärmeleitung und lassen eine Temperatur der Siegelbacken zu, die nur wenig über der Schmelztemperatur des Poly(meth)acrylats liegt, wenn auch in der Praxis im Interesse einer möglichst schnellen Versiegelung meist deutlich höhere Backentemperaturen, z. B. 120 bis 220 °C gewählt werden. Die Glasübergangstemperatur eines Kunststoffsubstrats kann der Backentemperatur Grenzen setzen. Um eine Versiegelung hoher Festigkeit zu erreichen, sollte ein Backendruck von mindestens 1, vorzugsweise 3 bis 6 kp/qcm angewendet werden.

Die Prüfung der Heißsiegelproben auf ihre effektive Abzugsfestigkeit wurde im Rahmen der Beispiele in üblicher Weise vorgenommen (Siegelnahtfestigkeit gemaß DIN 51 221).

Als Ergebnis ist festzuhalten daß zum Beispiel durch die kombinierte Anwendung der erfindungsgemaßen Poly(meth)acrylatdispersionen als Grundierung auf Aluminiumfolie und der wässrigen Dispersionen gemäß der DE-A 3 930 743 als äußere Heißsiegelschicht die Haftfestigkeit von Lösemittel- und/oder chlorhaltigen Polymergrundierungen erreicht wird.

Die folgenden Beispiele dienen zur Erläuterung der Erfindung.

Nachfolgend wird die Herstellung und Prüfung der Heißsiegelproben beschrieben, deren Festigkeitswerte in der Tabelle angegeben sind.

### VERGLEICHSBEISPIELE:

Zur Herstellung der Vergleichsprobe wurde eine 10 Gew.-prozentige Lösung eines handelsüblichen Vinylchlorid/Vinylacetat/Maleinsäure-Copolymerisats (Handelsprodukt "Vinylite VMHC", Union Carbide) in Ethylacetat mit einer Spiralrakel in einer solchen Dicke auf eine 40 Mikrometer dicke Weichaluminiumfolie aufgetragen, daß nach dem Trocknen während 1 Minute bei 180 °C ein Haftgrund von 2 Mikrometer Dicke entstand. Die erfindungsgemäßen Poly(meth)acrylatdispersionen PD werden mit einer Rakel aufgetragen und zur Filmbildung sofort in einen auf 180 °C vorgeheizten Umlufttrockenschrank eingebracht, bevor das Wasser aus der Dispersionsschicht verdunstet war. Die Rakel war so gewählt worden, daß die getrocknete Heißsiegelkleberschicht eine Dicke von 0,5 bis 3 Mikrometer hatte.

Der Auftrag der nach DE-A 3 930 743 gewonnenen Poly(meth)acrylatdispersion nach dem Trocknen der Poly(meth)acrylatdispersionen PD kann analog erfolgen.

Die beschichteten Aluminiumfolien wurden mittels eines Labor-Heißsiegelgeräts (Hersteller Brugger) auf einem 1 cm breiten Randstreifen gegen Folien aus Polystyrol bzw. PVC gesiegelt. Die Temperatur der Siegelbacken betrug 180 °C, der Siegeldruck 6 kp/qcm, die Siegelzeit 1 sec.

Zur Messung der Siegelnahtfestigkeit gemäß DIN 51 221 wurden nach Lagerung bei Normklima (23 °C, 50 % rel. Feuchte) 15 mm breite Streifen quer zur Siegelnaht geschnitten, aufgefaltet und in eine Zugprüfmaschine in der Weise eingespannt, daß ein Spannbackenpaar das freie Ende der Alu-Folie, das andere Spannbackenpaar dasjenige der Kunststoffolie hielt und die Siegelnaht von dem gespannten Prüfstreifen etwa rechtwinklig abstand. Als Siegelnahtfestigkeit wird die zum Trennen der Folien auf 15 mm Breite erforderliche Kraft bezeichnet.

Zur Ermittlung der Wasserfestigkeit der Siegelnaht wurden die Probestreifen bei Raumtemperatur 48 h in Wasser gelagert und danach im nassen Zustand ihre Siegelnahtfestigkeit in der oben beschriebenen Weise gemessen.

### BEISPIELE 1 - 20: (Tabelle 1)

### Ia. Allgemeine Vorschrift zur Herstellung der Poly(meth)acrylatdispersionen PD in Emulsionspolymerisation

### Verfahrensvarianten:

Iaa.) Zulauf
Iab.) Zulauf/Batch
Iac.) Zulauf/Zulauf

In einem Rundkolben, ausgestattet mit Rührer, Kontaktthermometer und Heizvorrichtung werden entionisiertes Wasser und Emulgator (Aerosol OT75®) vorgelegt. Nach Erreichen einer Temperatur von 80 °C werden Ammoniumperoxodisulfat (APS) als Initiator, gelöst in Wasser zugegeben und mit dem Zulauf 1 begonnen.
Iaa.) Im Fall Iaa.) beträgt die Zulaufsdauer 240 Minuten. Nach Zulaufsende wird 2 Stunden bei einer Temperatur von 80 °C nachgerührt, um die Polymerisation zu vervollständigen.
Iab.) Die Zulaufsdauer beträgt im Fall Iab.) 120 Minuten. Nach 1 Stunde Nachrührzeit bei 80 °C wird auf 30 °C abgekühlt und dann Zulauf 2 innerhalb 30 Minuten zugetropft und weitere 4 Stunden einquellen lassen. Anschließend wird die Monomer/Polymermischung auf 40 °C hochgeheizt und mit Redoxinitiator gestartet. Nach Erreichen der Temperaturspitze wird die Temperatur auf 80 °C eingeregelt und weitere 2 Stunden nachgerührt, um die Polymerisation zu vervollständigen.
Iac.) Im Fall Iac.) beträgt die Zulaufsdauer 120 Minuten. Danach wird 40 Minuten bei 80 °C nachgerührt und anschließend der Zulauf 2 innerhalb 2 Stunden zugegeben. Nach Zulaufsende wird weitere 2 Stunden nachgerührt, um die Polymerisation zu vervollständigen.

In allen Fällen Iaa.) - Iac.) werden anschließend Konservierungsmittel in Wasser zugesetzt (Mengen in Tab. 3).

In der Tabelle 1 werden die hinsichtlich ihrer Monomerzusammensetzungen, Emulgator- und Wassermenge in Zulauf 1 bzw. Zulauf 2 und in der Tabelle 3 die Mengenangaben der zusätzlichen Hilfsstoffe für die unterschiedenen Ausführungsbeispiele 1 bis 19 wiedergegeben.

### Ib. Vorschrift zur Herstellung der Poly(meth)acrylatdispersion durch Emulsionspolymerisation im Verfahren Batch/Zulauf

In einem Rundkolben, ausgestattet mit Kontaktthermometer und Heizvorrichtung wird der Inhalt für den Batch-Ansatz vorgelegt. Anschließend wird die Monomermischung auf 40 °C hochgeheizt und mit Redoxinitiator gestartet. Nach Erreichen der Temperaturspitze wird die Temperatur auf 80 °C eingeregelt und weitere 40 Minuten nachgerührt. Danach wird der Zulauf innerhalb 2 Stunden zugegeben. Nach Zulaufende wird weiter 1 Stunde nachgerührt, umd die Polymerisation zu vervollständigen. Anschließend wird bei 30 °C das Konservierungsmittel zugesetzt.

In der Tabelle 1 werden die hinsichtlich ihrer Monomerzusammensetzung, Emulgator- und Wassermenge in Zulauf 1 bzw. Zulauf 2 und in der Tabelle 3 die Mengenangaben der zusätzlichen Hilfsstoffe für Ausführungsbeispiel 20 wiedergegeben.

### II. Herstellung einer wässrigen Polyacrylatdispersion (gemäß DE-A 3 930 743, Siegellack)

In einem 1 I Rundkolben ausgestattet mir Rührer, Kontaktthermometer und Heizvorrichtung werden 160 Gew.-Teile vollentsalztes Wasser und 0,05 Gew.-Teile Natriumdiisooctylsulfosuccinat unter Rühren auf 80 °C erhitzt und mit 2,4 Gew.-Teilen einer 10-Gew.-%igen Ammoniumperoxodisulfat-Lösung (APS) versetzt. Dann werden bei dieser Temperatur als Emulsion 240 Gew.-Teile vollentsalztes Wasser, 4 Gew.-Teile Natriumdiisooctylsulfosuccinat, 1 Gew.-Teil APS, 320 Gew.-Teile Butylmethacrylat, 72 Gew.-Teile Methylmethacrylat, 8 Gew.-Teile Methacrylsäureamid mit 0,4 g Dodecylmercaptan als Regler innerhalb 4 Stunden zugetropft. Nach weiteren 2 Stunden bei 80 °C wird auf Raumtemperatur abgekühlt. Es wird eine stabile, koagulatfreie Dispersion erhalten. Der Festkörpergehalt liegt bei ca. 50 Gew.-%: der mittlere Teilchengrößendurchmesser bei 340 nm. Die Viskositat liegt bei 40 mPa · s. (Bestimmt mit einem Brookfield Viskostmeter)

### III. Prüfung der Heißsiegeleigenschaften

Auf eine nicht vorbehandelte Aluminiumfolie wird eine 1,5 µm dicke Schicht bestehend aus den Polymerdispersionen PD gemäß den Beispielen 1 bis 20 (Beispiele 1 bis 3 sind Vergleichsbeispiele) aufgebracht und 1 Minute bei 180 °C getrocknet.

Danach wurde eine 7 µm dicke Schicht aus der Dispersion gemäß II aufgetragen und ebenfalls 1 Minute bei 180 °C getrocknet. 15 mm breite Streifen der so behandelten Aluminiumfolien wurden bei 180 °C (Backentemperatur) 1 Sekunde mit 6 kp/cm² gegen eine Polystyrolfolie gesiegelt.

In der Tabelle 4 sind die Haftfestigkeiten dieses Verbundes angegeben. Eine Messung wurde nur dann durchgeführt, wenn bereits eine bestimmte Haftung im Handversuch festzustellen war. In der Tabelle ist als erster der Wert der Abzugsfestigkeit des trockenen Verbundes angegeben. In einer weiteren Spalte steht der Wert der Abzugsfestigkeit nach 48 Stunden Wasserlagerung.

### Resultat:

Die Ergebnisse zeigen, daß durch gezielte und erfindungsgemäße Auswahl der Monomeren und des Herstellverfahrens wäßrige Polymerdispersionen erhalten werden können, die als Grundierung von Aluminiumfolien die Haftfestigkeit von lösemittel- und chlorhaltigen Polymergrundierungen erreichen.

### IV. Prüfung der Grundierungshaftung auf verschiedenen metallischen Untergründen

Auf verschiedenen mit Ethylacetat gereinigten Metallblechen (Aluminium und Eisen) wurde die Dispersion mittels Filmziehrahmen (Spalthöhe: 20, 60, 100 µm) bzw. die Dispersion unter Zusatz von 4 % Butyldiglykolacetat (Spalthöhe: 100, 200 µm) aufgetragen. Anschließend wurde die Haftung mittels Gitterschnittprüfung (mit zusätzlichem Tesaabriß) visuell getestet. In der Tabelle 5 sind die Werte vor und nach dem Tesaabriß aufgeführt.

### Resultat:

In allen Fällen erhält man gut haftende Filme.

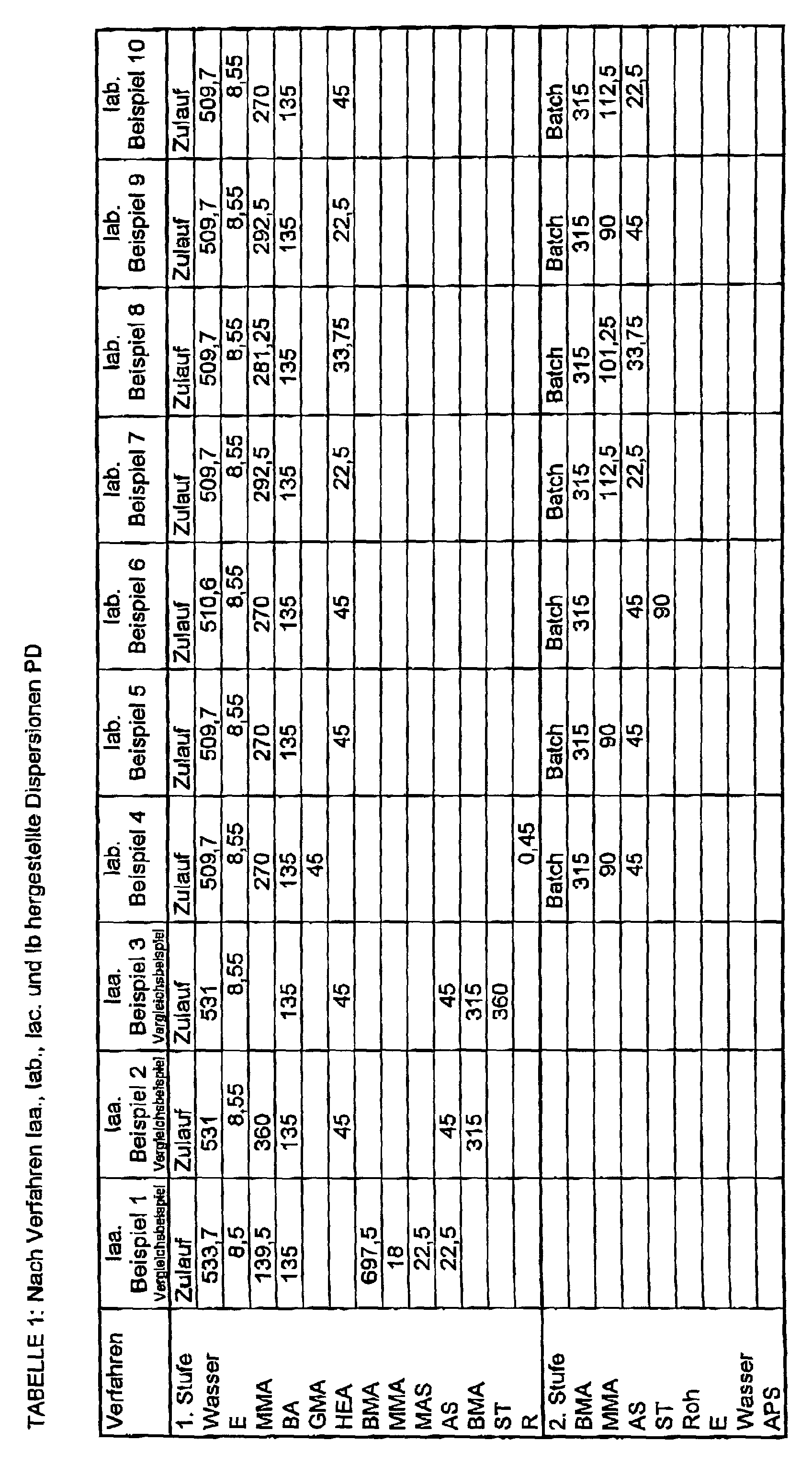

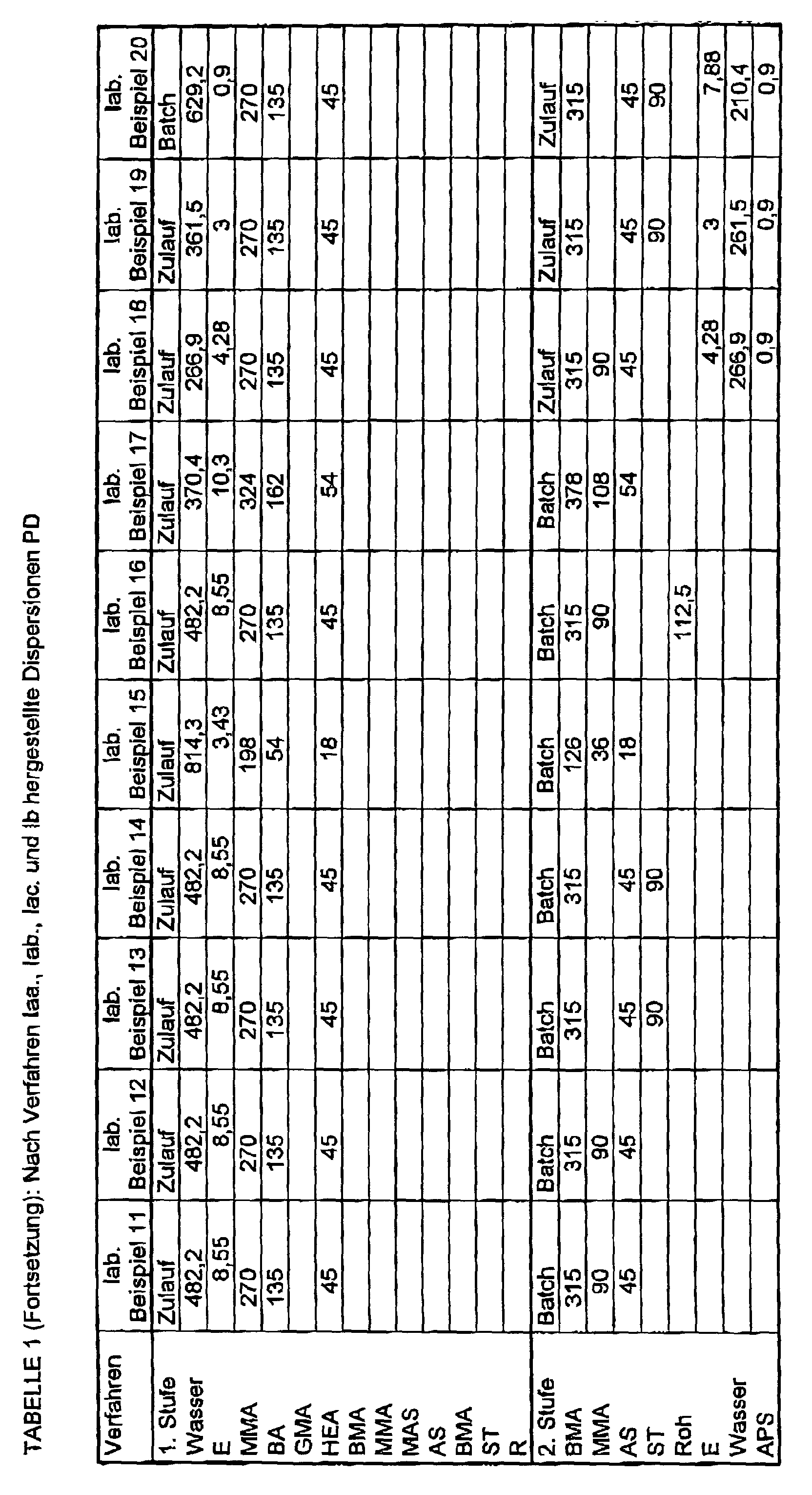

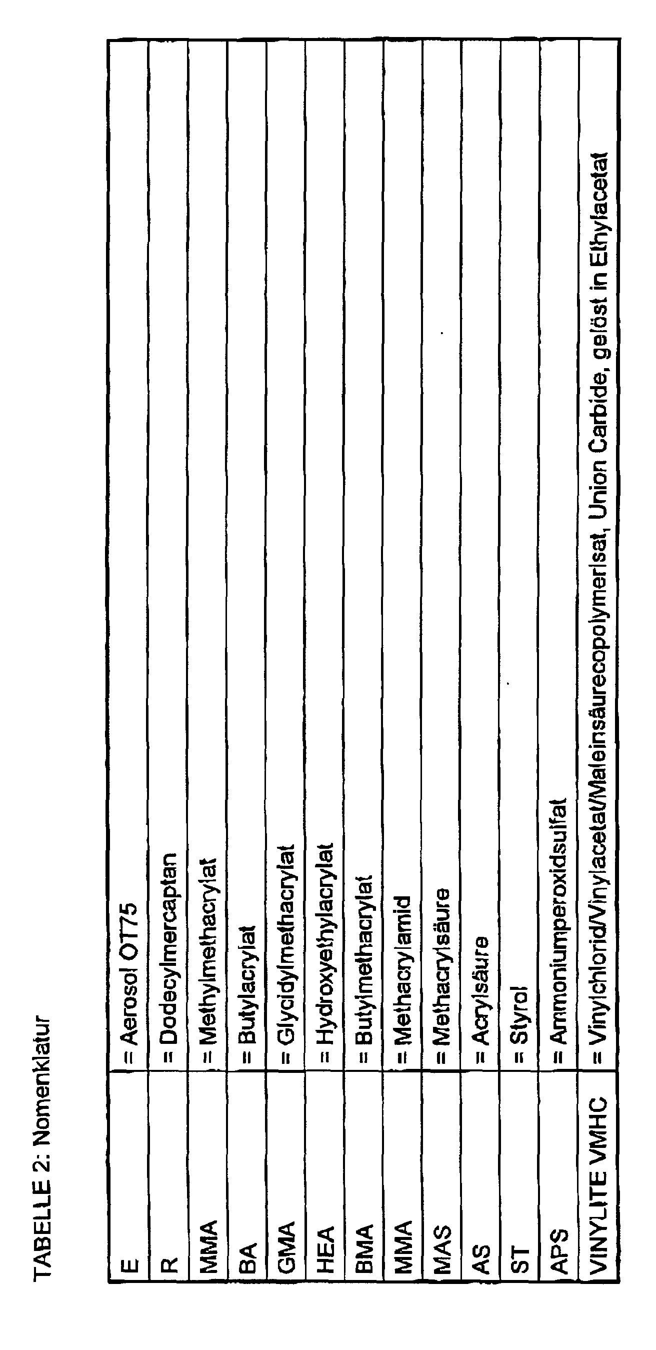

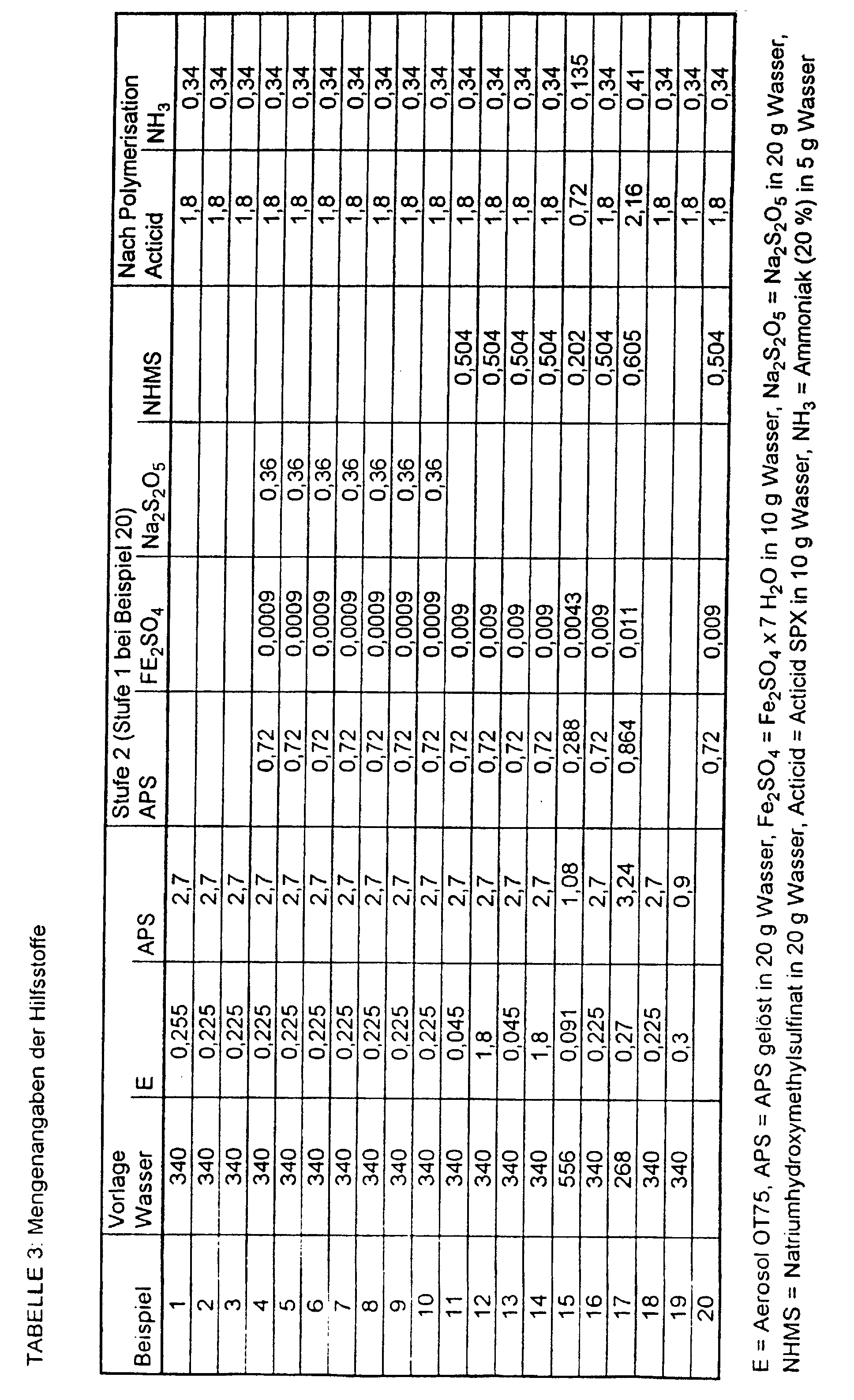

**TABELLE 4:**

| Meßwerte für die Abzugsfestigkeit | | | | |
|---|---|---|---|---|
| | **Abzugsfestigkeit N/15 mm Streifenbreite** | | | |
| Beispiele | **Alu gegen PS gesieg.** | | **Alu gegen PVS ges.** | |
| | normal gepr. | n. 48h H2O | normal gepr. | n. 48h H2O |
| 1 | zu gering | | | |
| 2 | 4,8 | 1,7 | 2,1 | 1,1 |
| 3 | 5,7 | 3,7 | 3,1 | 1,7 |
| 4 | 6,9 | 8,0 | 6,7 | 5,8 |
| 5 | 6,1 | 4,3 | 5,1 | 2,5 |
| 6 | 7,0 | 6,0 | 3,8 | 2,4 |
| 7 | zu gering | | | |
| 8 | zu gering | | | |
| 9 | zu gering | | | |
| 10 | zu gering | | | |
| 11 | 6,9 | 4,7 | 3,4 | 2,9 |
| 12 | 5,0 | 6,2 | 3,3 | 3,3 |
| 13 | 4,7 | 2,3 | 2,3 | 2,3 |
| 14 | 7,6 | 7,4 | 4,8 | 3,7 |
| 15 | 4,2 | 6,8 | 1,9 | 2,4 |
| 16 | 4,2 | 4,9 | 1,9 | 2,1 |
| 17 | 5,9 | 1,9 | 3,9 | 2,9 |
| 18 | 2,0 | 0,6 | 1,3 | 0,7 |
| 19 | 8,1 | 8,0 | 6,9 | 5,6 |
| 20 | 3,8 | 4,3 | 2,4 | 2,6 |

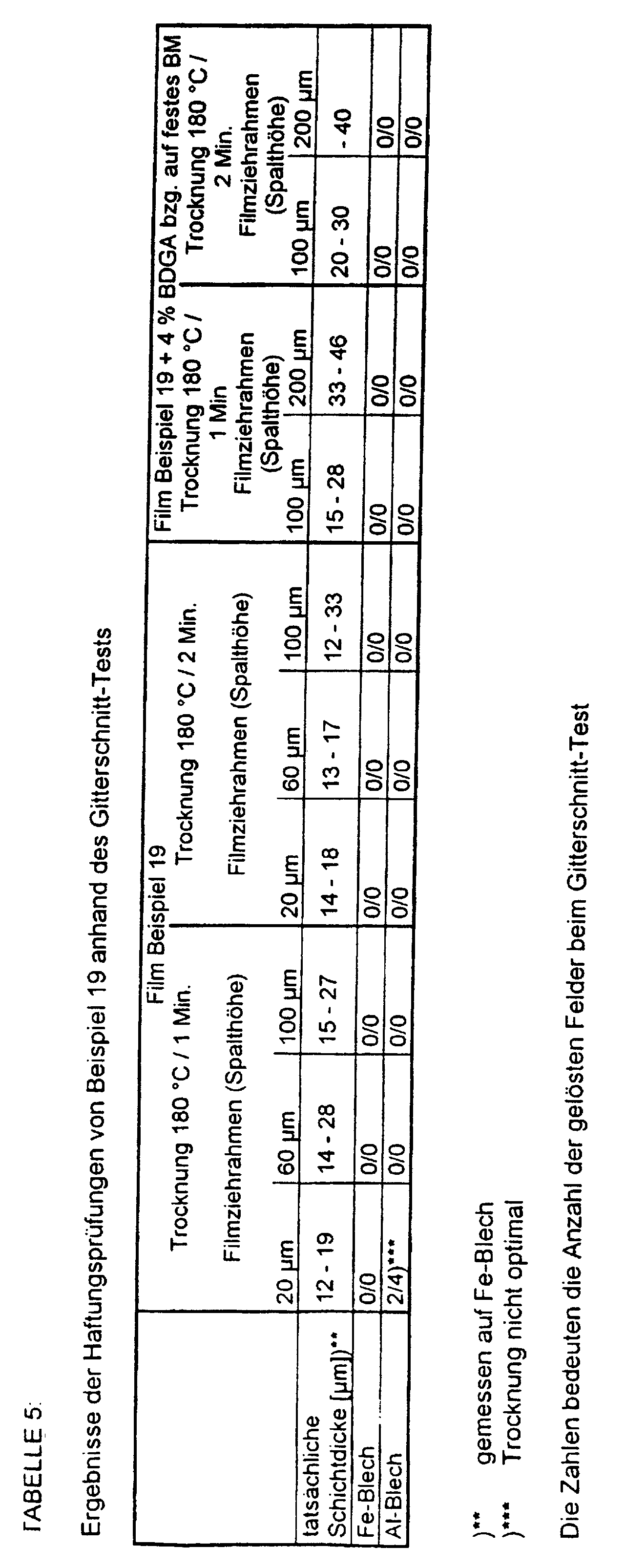

## Patentansprüche

1. Wässrige Poly(meth)acrylatdispersionen PD hergestellt in einem mehrstufigen Emulsionspolymerisationsverfahren, wobei das partikelförmige Poly(meth)acrylat aufgebaut ist aus
(A) 50 bis 90 Gew.-% Methacryl-säurealkylester sowie
(B) 5 bis 30 Gew.-% eines Acrylsäurealkylesters mit einer Glastemperatur im Bereich T_{g} ca. -50 bis -20 °C der Formel I 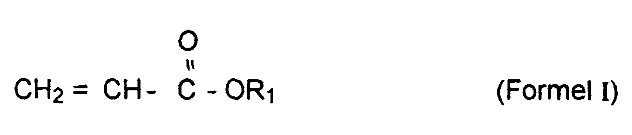 worin R₁ für einen Alkyl-, einen Aryl- oder einen Alkyarylrest mit 2 bis 10 Kohlenstoffatomen steht, sowie
(C) 2 bis 10 Gew.-% eines funktionalisierten Monomeren der Formel II 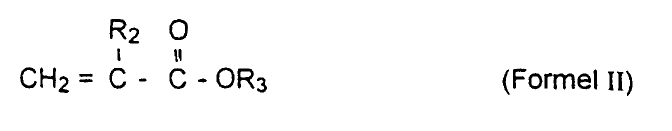 worin R₂ für Wasserstoff oder Methyl und R₃ für einen Rest 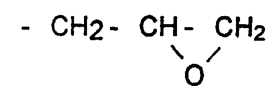 oder für einen mit mindestens einer Hydroxylgruppe substituierten Alkylrest mit 2 bis 6 Kohlenstoffatomen steht; sowie
(D) 2 bis 10 Gew.-% mindestens einer radikalisch polymerisierbaren Carbonsäure oder einer Polycarbonsäure oder einer teilveresterten Polycarbonsäure, sowie
(E) 0 bis 40 Gew.-% weitere, mit (A) bis (D) copolymerisierbaren Monomeren.
mit der Maßgabe. daß in der ersten Polymerisationstufe (Zulauf 1) Monomere der Gruppen (A) bis (C) und gegebenenfalls (E) und in der zweiten Polymerisationsstufe Monomere der Gruppen (A), (B), (D) und gegebenenfalls (E) copolymerisiert werden, mit der weiteren Maßgabe, daß sich die Mengenangaben zu (A) bis (E) zu 100 % ergänzen.

2. Wässrige Poly(meth)acrylatdispersionen PD hergestellt in einem mehrstufigen Emulsionspolymerisationsverfahren, wobei das partikelförmige Poly(meth)acrylat aufgebaut ist aus
(A) 60 bis 80 Gew.-% Methacrylsäurealkylester sowie
(B) 10 bis 20 Gew.-% eines Acrylsäurealkylesters mit einer Glastemperatur im Bereich T_{g} ca. -50 bis -20 °C der Formel I 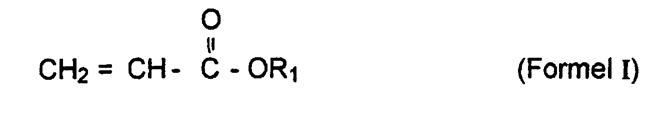 worin R₁ für einen Alkyl-, einen Aryl- oder einen Alkyarylrest mit 2 bis 10 Kohlenstoffatomen steht, sowie
(C) 3 bis 10 Gew.-% eines funktionalisierten Monomeren der Formel II 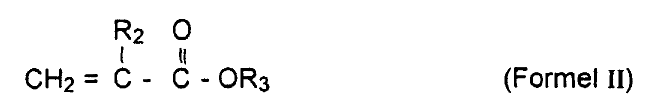 worin R₂ für Wasserstoff oder Methyl und R₃ für einen Rest 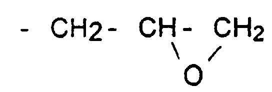 oder für einen mit mindestens einer Hydroxylgruppe substituierten Alkylrest mit 2 bis 6 Kohlenstoffatomen steht, sowie
(D) 3 bis 10 Gew.-% mindestens einer radikalisch polymerisierbaren Carbonsäure oder einer Polycarbonsäure oder einer teilveresterten Polycarbonsäure, sowie
(E) 0 bis 40 Gew.-% weitere, mit (A) bis (D) copolymerisierbaren Monomeren.
mit der Maßgabe, daß in der ersten Polymerisationstufe (Zulauf 1) Monomere der Gruppen (A) bis (C) und gegebenenfalls (E) und in der zweiten Polymerisationsstufe Monomere der Gruppen (A), (B), (D) und gegebenenfalls (E) copolymerisiert werden, mit der weiteren Maßgabe, daß sich die Mengenangaben zu (A) bis (E) zu 100 % ergänzen.

3. Heißsiegelfähig beschichtete Substrate auf Metall- oder Kunststoffbasis, **dadurch gekennzeichnet, daß** als Grundierschicht die Poly(meth)acrylatdispersion PD gemäß Anspruch 1 auf das Substrat aufgebracht und auf die getrocknete Grundierschicht eine weitere Schicht aus einer wässrigen Poly(meth)acrylatdispersion bestehend zu wenigstens 70 Gew.-% aus wenigstens einem Alkylester der Methacrylsäure mit 1 bis 4 Kohlenstoffatomen und mit einem Gehalt an Acrylamid und/oder Methacrylamid und/oder Aminoalkylacrylat oder-methacrylat aufgebracht und getrocknet wird.

4. Verfahren zur Herstellung einer Polymerdispersion gemäß Anspruch 1, **dadurch gekennzeichnet, daß** in einem zweistufigen Verfahren in einer ersten Stufe die Monomere der Gruppen (A) bis (C) und gegebenenfalls (E) copolymerisiert und in einer zweiten Stufe die Monomere der Gruppen (A), (B), (D) und gegebenenfalls (E) copolymerisiert werden.

5. Verfahren nach Anspruch 4, **dadurch gekennzeichnet, daß** die Menge der 1. Polymerisationsstufe sich zur Menge der 2. Polymerisationsstufe zwischen 30: 70 und 70 : 30 Gew.-Teilen verhält.

6. Verwendung der Zusammensetzung gemäß Anspruch 1 als Grundierschicht für Metalle.

## Claims

1. Aqueous poly(meth)acrylate dispersions PD prepared in a multi-step emulsion polymerisation process, wherein the particulate poly(meth)acrylate is synthesised from
(A) 50 to 90 wt.% of alkyl methacrylate and
(B) 5 to 30 wt.% of an alkyl acrylate with a glass transition temperature in the range T_{g} from about -50 to -20°C, of formula I 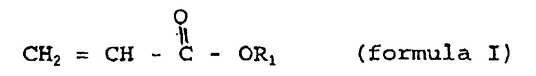 wherein R₁ denotes an alkyl, aryl or alkylaryl group having 2 to 10 carbon atoms, and
(C) 2 to 10 wt.% of a functionalised monomer of formula II 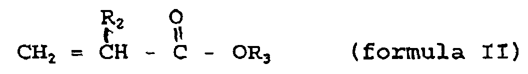 wherein R₂ denotes hydrogen or methyl and R₃ denotes a group 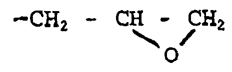 or an alkyl group with 2 to 6 carbon atoms substituted by at least one hydroxyl group; and
(D) 2 to 10 wt.% of at least one radically polymerisable carboxylic acid or a polycarboxylic acid or a partially esterified polycarboxylic acid, and
(E) 0 to 40 wt.% of other monomers which are copolymerisable with (A) to (D),
with the proviso that in the first polymerisation step (addition 1) monomers of groups (A) to (C) and optionally (E) are copolymerised and in the second polymerisation step monomers of groups (A), (B), (D) and optionally (E) are copolymerised, with the further proviso that the amounts of (A) to (E) add up to 100%.

2. Aqueous poly(meth)acrylate dispersions PD prepared in a multi-step emulsion polymerisation process, wherein the particulate poly(meth)acrylate is synthesised from
(A) 60 to 80 wt.% of alkyl methacrylate and
(B) 10 to 20 wt.% of an alkyl acrylate with a glass transition temperature in the range T_{g} from about -50 to -20°C, of formula I 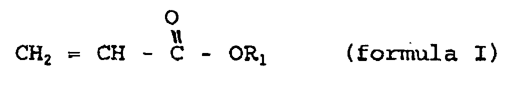 wherein R₁ denotes an alkyl, aryl or alkylaryl group having 2 to 10 carbon atoms, and
(C) 3 to 10 wt.% of a functionalised monomer of formula II 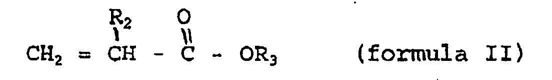 wherein R₂ denotes hydrogen or methyl and R₃ denotes a group 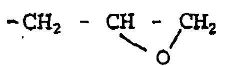 or an alkyl group with 2 to 6 carbon atoms substituted by at least one hydroxyl group; and
(D) 3 to 10 wt.% of at least one radically polymerisable carboxylic acid or a polycarboxylic acid or a partially esterified polycarboxylic acid, and
(E) 0 to 40 wt.% of other monomers which are copolymerisable with (A) to (D),
with the proviso that in the first polymerisation step (addition 1) monomers of groups (A) to (C) and optionally (E) are copolymerised and in the second polymerisation step monomers of groups (A), (B), (D) and optionally (E) are copolymerised, with the further proviso that the amounts of (A) to (E) add up to 100%.

3. Substrates based on metal or plastics, having a heat-sealable coating, **characterised in that** the poly(meth)acrylate dispersion PD according to claim 1 is applied to the substrate as a primer and over the dried primer another coat of an aqueous poly(meth)acrylate dispersion is applied, consisting of at least 70 wt.% of at least one alkyl ester of methacrylic acid having 1 to 4 carbon atoms and having a content of acrylamide and/or methacrylamide and/or aminoalkyl acrylate or methacrylate, and dried.

4. Process for preparing a polymer dispersion according to claim 1, **characterised in that** in a two-step process, in a first step, the monomers of groups (A) to (C) and optionally (E) are copolymerised and in a second step the monomers of groups (A), (B), (D) and optionally (E) are copolymerised.

5. Process according to claim 4, **characterised in that** the ratio of the quantity of the 1st polymerisation step to the quantity of the 2nd polymerisation step is between 30:70 and 70:30 parts by weight.

6. Use of the composition according to claim 1 as a primer for metals.

## Revendications

1. Dispersions aqueuses de poly(méth)acrylates PD préparées en un procédé de polymérisation en émulsion à plusieurs étapes, dans lequel le poly(méth)acrylate sous forme particulaire est constitué de :
A) 50 à 90 % en poids d'un ester d'acide acrylique ainsi que
B) 5 à 30 % en poids d'un ester d'acide acrylique ayant une température vitreuse dans la zone Tg d'environ -30 à -20°C, de formule I : 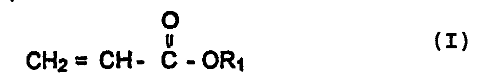 dans laquelle R¹ représente un reste alkyl, un reste aryle ou un reste alkylaryle ayant de 2 à 10 atomes de carbone, ainsi que :
C) 2 à 10 % en poids d'un monomère fonctionnalisé de formule II 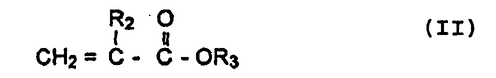 dans laquelle R² représente de l'hydrogène ou un méthyle et R³ représente un reste : 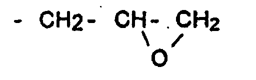 ou un reste alkyle substitué par au moins un groupe hydroxyle et ayant 2 à 6 atomes de carbone ; ainsi que :
D) 2 à 10 % en poids d'au moins un acide carboxylique polymérisable par voie radicalaire ou d'un acide polycarboxylique ou d'un acide polycarboxylique partiellement estérifié ainsi que :
E) 0 à 40 % en poids d'autres monomères copolymérisables avec de (A) à (D);
avec la précision qu'à la première étape de polymérisation (addition 1), des monomères des groupes (A) à (C) et éventuellement (E) et à la deuxième étape de polymérisation des groupes (A), (B), (D) et éventuellement (E) sont copolymérisés, et avec une deuxième précision selon laquelle les données en quantités pour (A) à (E) se complètent à 100 %.

2. Dispersions aqueuses de polyméthacrylate [PD] préparées dans un procédé de polymérisation en émulsion à plusieurs étapes dans lequel le poly(méth)acrylate sous forme de particules est constitué de :
A) 60 à 80 % en poids d'ester d'alkyle d'acide méthacrylique,
B) 10 à 20 % en poids d'un ester d'acide acrylique ayant une température vitreuse dans la zone Tg d'environ -50 à -20°C, de formule I 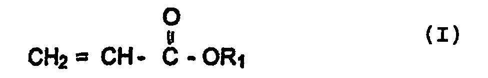 dans laquelle R¹ représente un reste alkyle, un reste aryle, ou un reste arylalkyle ayant de 2 à 10 atomes de carbone, ainsi que,
C) 3 à 10 % en poids d'un monomère fonctionnalité de formule II 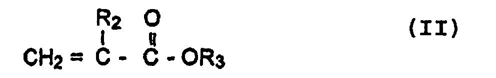 dans laquelle R² représente de l'hydrogène ou un méthyle et R³ représente un reste 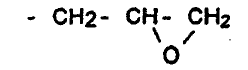 ou un reste alkyle substitué par au moins un groupe hydroxyle ayant de 2 à 6 atomes de carbone ainsi que
D) 3 à 10 % en poids d'au moins un acide carboxylique polymérisable par voie radicalaire ou un acide polycarboxylique ou un acide polycarboxylique partiellement estérifié, ainsi que
E) 0 à 40 % en poids d'autres monomères copolymérisables avec de (A) à (D)
avec la précision qu'au premier stade de polymérisation (amenée 1), des monomères des groupes (A) et (C) et éventuellement (E) et au deuxième stade de polymérisation des monomères des groupes (A), (B), (D) et éventuellement (E) sont copolymérisés, avec la précision supplémentaire que les données en poids pour (A) à (E) se complètent à 100 %.

3. Substrats enduits susceptibles de thermofusion, à base de métal ou de matière plastique,
**caractérisés en ce que**
comme première couche de fond, la dispersion de poly(méth)acrylate (PD) conformément à la revendication 1 est appliquée sur le substrat et on applique sur la couche de premier enduit séchée, une autre couche à base de dispersion aqueuse de poly(méth)acrylate consistant pour au moins 70 % en poids, en au moins un ester d'alkyle d'acide méthacrylique ayant de 1 à 4 atomes de carbone, et ayant une teneur en acrylamide et/ou en méthacrylamide et/ou en acrylate ou en méthacrylate d'amino alkyle, et on la sèche.

4. Procédé de préparation d'une dispersion de polymère conformément à la revendication 1,
**caractérisé en ce que**
dans le procédé à deux étapes, à la première étape les monomères des groupes (A) à (C) et éventuellement (E) sont copolymérisés et dans une deuxième étape les monomères des groupes (A), (B), (D) et éventuellement (E), sont copolymérisés.

5. Procédé selon la revendication 4,
**caractérisé en ce que**
la quantité de la première étape de polymérisation par rapport à la quantité de la deuxième étape de polymérisation se situe entre 30 : 70 et 70 : 30 parties en poids.

6. Utilisation de la composition conformément à la revendication 1 comme première couche pour des métaux.
